# DEMANDE DE BREVET EUROPEEN

(11) **EP 3 663 983 A1**
(43) Date de publication de la demande: **10.06.2020**
(21) Numéro de dépôt: 18306633.1
(22) Date de dépôt: 06.12.2018
(51) Int. Cl.: G06K 19/07, G06K 19/077

(54) **PROCÉDÉ DE FABRICATION D'UNE CARTE À PUCE MÉTALLIQUE OU NON AVEC ANTENNE RELAIS**

(71) Demandeur: Thales Dis France SA, 92190 Meudon (FR)
(72) Inventeur: MENDEZ, Lucile, 13881 Gémenos Cedex (FR); MERIDIANO, Jean-Luc, 13881 Gémenos Cedex (FR); COLOMBARD, Claude, 13881 Gémenos Cedex (FR); BUYUKKALENDER, Arek, 13881 Gémenos Cedex (FR); SEBAN, Frederick, 13881 Gémenos Cedex (FR)
(74) Mandataire: Milharo, Emilien

(57) **Abrégé**

L'invention concerne un procédé de fabrication d'une carte à puce radiofréquence, ledit procédé comprenant les étapes de :
- fourniture d'un corps (2) de carte (1) comportant une première cavité (9) débouchant sur une première face (7) du corps de carte;
- insertion d'un premier module (3, 3bis) équipé d'une antenne de module radiofréquence (L1), dans ladite première cavité,
- disposition dans ledit corps de carte, d'une antenne relais (L2) configurée de manière à être couplée électromagnétiquement avec ladite antenne radiofréquence ;
Le procédé est caractérisé en ce qu'il comprend les étapes suivantes :
- réalisation d'une seconde cavité (14) débouchant sur une face opposée (8) à ladite première face, ladite seconde cavité étant configurée pour recevoir antenne relais (L2, 13E),
- insertion d'une antenne relais dans ladite seconde cavité.

L'invention concerne également une carte correspondante obtenue par le procédé.

## Description

### Domaine de l'invention.

L'invention concerne le domaine des cartes à puce comportant des modules à puce de circuit intégré radiofréquence couplée avec antenne relais (ou antenne passive ou amplificatrice).

Elle vise en particulier la fabrication de carte à puce comportant une ou plusieurs feuille(s) ou plaque métallique(s) ; Toutefois, l'invention peut s'appliquer à des cartes sans feuille ou plaque métallique mais avec des matériaux divers tels que du bois, du plastique dans le corps de carte.

Les cartes à puce peuvent être du type hybride (contacts et sans-contact) ou purement sans-contact (sans bornier de contacts électriques).

Les cartes à puce peuvent avoir un module de carte à puce comportant sur un substrat isolant, un transpondeur radiofréquence comprenant la puce et l'antenne. Ces modules de carte à puce radiofréquence sont généralement encartés dans une cavité du corps de carte.

Le module radiofréquence peut aussi se coupler electromagnétiquement avec une antenne passive (relais, d'amplification, appelée aussi « booster » en anglais) logée dans le corps de carte.

L'invention vise plus particulièrement les cartes bancaires qu'elles aient un corps majoritairement métallique ou pas.

### Art antérieur

Le brevet FR 2743649 décrit un module de carte à puce à antenne et/ou plages de contact pouvant être incorporé dans une cavité de corps de carte ou pouvant former une étiquette électronique RFID.

Le brevet EP1031939 (B1) décrit une carte radiofréquence (ou sans-contact) comprenant une antenne relais bobinée en forme de huit, logée dans un corps de carte et couplée électromagnétiquement ou inductivement avec l'antenne du module. L'antenne relais comporte une bobine étroite concentrique avec l'antenne du module et une bobine large pour capter le champ électromagnétique d'un lecteur.

Par ailleurs, on connait également des dispositifs radiofréquences hybrides, tels que des cartes à contacts et sans-contact, comportant un module de carte à puce à contacts incorporé dans un corps de carte et connecté à une antenne logée dans le corps de carte.

Par ailleurs, il existe des cartes bancaires comportant des éléments métalliques en insert à l'intérieur du corps de carte en matière plastique ou en surface externe du corps de carte tel que l'aluminium, le titane, de l'or. Le métal procure une sensation de lourdeur de la carte qui est très appréciée par les utilisateurs. Il donne aussi un aspect esthétique visible qui en fait un produit haut de gamme pour privilégiés.

### Problème technique.

On assiste actuellement à une demande accrue du public pour des cartes à puce lourdes intégrant des matières métalliques. Toutefois, la présence de métal perturbe fortement la communication radiofréquence et les procédés de fabrication sont rendus plus complexes pour obtenir des cartes conformes aux standards en vigueur de la carte à puce.

L'invention a toutefois pour objectif un procédé de fabrication aisé (ou simplifié) de cartes à puce qui puisse s'appliquer à toute sorte de carte, avec ou sans métal dans le corps de carte.

En particulier, l'invention vise une structure de module à puce électronique pour carte à puce qui permette d'avoir de bonnes performances radiofréquences RF carte dans toutes les directions, même si la carte contient un maximum de métal que ce soit à l'intérieur ou au-dessus ou sur le bord ou en périphérie de la carte.

La carte doit également avoir une structure satisfaisant les contraintes de tenue mécanique en terme d'ISO et de durabilité dans le temps. De telles cartes peuvent être conformes notamment au standard ISO 78016 et/ ou ISO / IEC 14443 ou équivalents pour effectuer des échanges de communication à contacts et/ou de proximité avec un lecteur à contacts ou de type NFC.

L'invention vise à résoudre les inconvénients ou objectifs précités.

L'invention propose une structure de module et de carte qui permette de bonnes performances radiofréquences et un procédé de fabrication simple notamment avec une opération d'assemblage aisé du module avec le corps de carte.

### Résumé de l'invention.

L'invention consiste, selon un aspect préféré, à utiliser dans deux cavités opposées en regard l'une de l'autre, un premier module à antenne de transpondeur radiofréquence associé à un second module à antenne relais pour faciliter la fabrication des cartes radiofréquences. Puis, quand il s'agit de cartes métalliques, la configuration de la carte proposée par l'invention, permet aussi de remédier à la perturbation électromagnétique causée par la présence de métal dans le corps de carte, indépendamment de sa quantité.

L'invention prévoit de réaliser un ensemble (ou système radiofréquence avec booster, comprenant deux parties principales : une première partie formant un module à antenne radiofréquence et une seconde partie comportant une antenne relais (ou passive ou d'amplification) ;
Elle prévoit d'associer ensuite les deux parties de l'ensemble (ou système) sur le corps de carte de manière à être couplées électromagnétiquement ensemble.

Chaque antenne (ou inductance L1, L2) et/ou la puce peut être supportée par un substrat isolant (diélectrique). La puce peut comprendre une capacité ou être relié à une capacité disposée sur le substrat en plus de l'antenne L1.

L'encartage (ou insertion) des deux parties du système radiofréquence (ou de deux circuit imprimés (module ou lead frame en anglais) dans le corps de carte contenant du plastique et/ou du métal, peut s'effectuer pour le module à antenne radiofréquence par une face avant de la carte de manière connue et pour l'antenne relais par la face arrière de la carte, opposée à la face avant, en étant directement en regard du module radiofréquence.

L'antenne relais présente de préférence, une surface de couplage généralement supérieure à celle de l'antenne du module radiofréquence. La surface de couplage de chaque antenne est définie par la surface s'étendant à l'intérieur de la spire externe de l'antenne.

L'antenne relais peut être de préférence insérée dans une cavité débouchant sur la face arrière du corps de carte.

De préférence, les antennes du module de transpondeur radiofréquence et l'antenne relais sont sensiblement concentriques ou comprenant une portion de surface de couplage en regard l'une de l'autre.
De préférence, la surface de couplage de l'antenne relais couvre à l'aplomb celle du module de transpondeur radiofréquence.

Cela peut impliquer dans un mode de réalisation préféré, de réaliser une cavité supplémentaire débouchant sur une face opposée à celle comportant le module à antenne (ou de transpondeur radiofréquence) avec un plan P3 pour loger l'antenne relais sous la cavité du module radiofréquence.

De préférence, chaque cavité peut être configurée de manière à former respectivement un plan en regard l'un de l'autre.

Une première étape peut consister à insérer une antenne relais dans la cavité côté face arrière, puis à insérer le module à antenne (ou inversement) afin d'avoir les deux antennes couplées ensemble pour améliorer les performances de communication.

Tout moyen d'assemblage, tel que des adhésifs ou autre éléments de montage mécanique sont éventuellement prévus pour assembler les deux modules.

Ainsi, l'invention propose un ensemble de modules de carte à puce qui convient à toute carte à puce et qui s'affranchit de toute perturbation métallique éventuellement présente dans le corps de carte. La fabrication de la carte est facilitée par l'exécution d'un encartage du module antenne et également du module à antenne relais sur la face arrière opposée à la face avant d'une carte à puce.

A cet effet, l'invention a pour objet un procédé de fabrication d'une carte à puce radiofréquence, ledit procédé comprenant les étapes de :
- fourniture d'un corps de carte comportant une première cavité débouchant sur une première face du corps de carte;
- insertion d'un module équipé d'une antenne de transpondeur radiofréquence, dans ladite première cavité,
- disposition dans ledit corps de carte, d'une antenne relais configurée de manière à être couplée électromagnétiquement avec ladite antenne de transpondeur(ou puce) radiofréquence,
caractérisé en ce qu'il comprend les étapes suivantes :
- réalisation d'une seconde cavité plus large que ladite première cavité, débouchant sur la face arrière opposée à ladite première face avant en regard au moins partiel de ladite première cavité ;
- insertion de ladite antenne relais dans ladite seconde cavité.

L'antenne relais peut être déposée nue dans la seconde cavité, puis recouverte de résine ou formée sur un substrat diélectrique à la manière d'un module de carte à puce.

Selon d'autres caractéristiques :
- Les première et seconde cavités peuvent être réalisées d'un côté et de l'autre opposés d'une plaque métallique ; La plaque métallique peut s'étendre de bord à bord de la carte et former au moins une couche principale de la carte ;
- Chaque cavité peut être configurée de manière à former respectivement un premier et second plans en regard l'un de l'autre ;
- Les premier et second plans sont formés par au moins deux ou trois excroissances ou dents s'étendant vers le centre de la cavité et formant chacune un point d'appui d'au moins un module ;
- Les premier et second plans peuvent comporter des perforations, des évidements ou des encoches ou des fentes traversant les plans et débouchant dans les deux cavités ;
- Les premier et second plans peuvent comporter des dents orientés vers le centre de la cavité ;
- Le corps de carte (ou un insert contenu dans le corps), peut comporter ou peut être formé d'une plaque en métal ;
- Le corps de carte (ou un insert contenu dans le corps) peut comprendre majoritairement du métal en proportion du poids total de la carte : par exemple plus de 70 % ou 80 %, voire plus de 95 % du poids total de la carte.

L'invention a également pour objet une carte à puce radiofréquence, comprenant:
- un corps de carte comportant une première cavité débouchant sur une première face du corps de carte;
- d'un module équipé d'une antenne de module radiofréquence, inséré dans ladite première cavité,
- une antenne relais dans ledit corps de carte, conformée de manière à être couplée électromagnétiquement avec ladite antenne de module radiofréquence, et ayant une surface de couplage plus grande que celle de l'antenne de module, caractérisée en ce qu'elle comprend:
- une seconde cavité débouchant sur une face opposée à ladite première face, ladite seconde cavité étant configurée de manière à recevoir ladite antenne relais, ladite antenne relais étant insérée dans ladite seconde cavité.

Selon d'autres caractéristiques,
- Le second module comprend un capteur biométrique affleurant à la surface du corps de carte ;
- Le capteur biométrique est apparié avec une puce radiofréquence du premier module.

### Descriptif des figures :

- La figure 1A illustre une étape de fabrication d'une carte radiofréquence en cours de montage, avec les modules et les plans de cavité P1 et P3 réalisés conformément au mode préféré de l'invention ;
- La figure 2A est une vue similaire à la figure 1A montrant une variante des plan de cavité P1, P3;
- La figure 3A illustre une vue en coupe similaire à la figure 1A, après insertion ou assemblage du module de transpondeur 3 et du module comprenant l'antenne relais ;
- La figure 4 illustre une carte en cours d'assemblage, avec des cavités et un module comprenant l'antenne relais réalisée conformément à une seconde variante du mode préféré de l'invention;
- La figure 5 illustre schématiquement comment sont réparties les fonctions radiofréquences entre le module 3 comportant la puce radiofréquence 18 et le module comprenant l'antenne relais L2;
- La figure 6 illustre schématiquement le principe du circuit électrique obtenu grâce au couplage du module à antenne 3 avec une antenne relais L2.

### Description.

D'une manière générale, des références identiques ou similaires d'une figure à l'autre représentent un élément identique ou similaire.

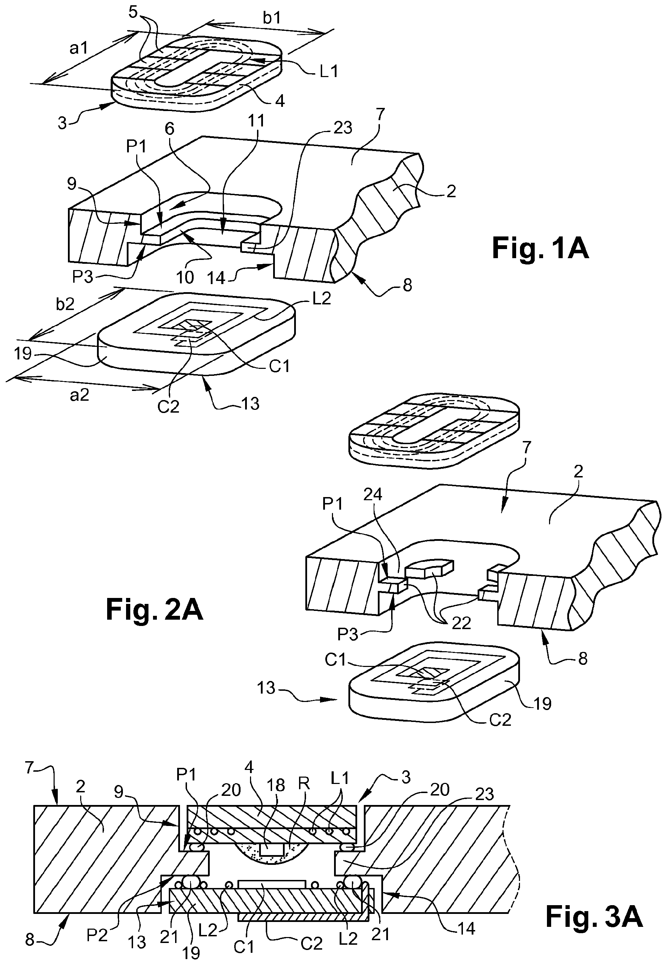

A la figure 1A, est illustrée une première étape du procédé de fabrication d'une carte à puce radiofréquence comprenant un corps de carte. La carte est en cours de montage avec le module antenne 3 et des cavités formant des plans P1 et P3 réalisés conformément au mode préféré de l'invention.

Selon cette première étape, l'invention prévoit la fourniture d'un corps (ou insert) 2 de carte à puce comportant une première cavité 6 débouchant sur une première face 7 du corps de carte;
La cavité définit en principe un plan P1 situé à un premier niveau de cavité. C'est en principe sur ce plan P1 qu'est fixé un module antenne 3 de carte à puce sans-contact. Ce plan P1 comporte un évidement 11 sensiblement central dans la cavité de manière à y loger une puce de circuit intégré notamment sans-contact ou à contacts et éventuellement un enrobage isolant de protection. La cavité 6 définit un bord ou une paroi interne de cavité 9 et l'évidement central 11 sous le plan P1, définit une paroi ou bord interne 10.

L'insert (ou élément de corps) de carte peut être de toute matière connue utilisée dans la carte à puce tel que par exemple en plastique, PVC, PET, PC, bois. De préférence, la matière du corps ou de l'insert est principalement en métal massif ou en majorité à plus de 70 % en volume en métal (pleine masse ou sous forme de particules, billes assemblées par un liant).
La plaque (ou assemblage de feuille) métallique peut comprendre une matière métallique parmi la plus lourde (en masse volumique) comme le tungstène, l'or, l'argent, l'acier mais aussi parmi les plus légers comme l'aluminium.

Le procédé selon ce mode préféré, comporte aussi une étape insertion d'un module équipé d'une antenne radiofréquence L1 de module 3, dans ladite première cavité 6.

Le procédé prévoit également une étape de disposition dans le corps de carte, d'une antenne relais L2 configurée de manière à être couplée électromagnétiquement avec l'antenne radiofréquence L1 du module 3; L'antenne relais L2 a généralement une surface de couplage plus grande que celle de l'antenne de module. Toutefois, il n'est pas exclu d'avoir une antenne relais (formant un circuit raisonnant RLC) dont la surface de couplage est inférieure ou égale à celle de l'antenne (inductance ou bobine) L2 de transpondeur reliée à la puce radiofréquence 18. L'avantage peut être de permettre une bonne communication quel que soit la face de la carte orientée vers un lecteur NFC.

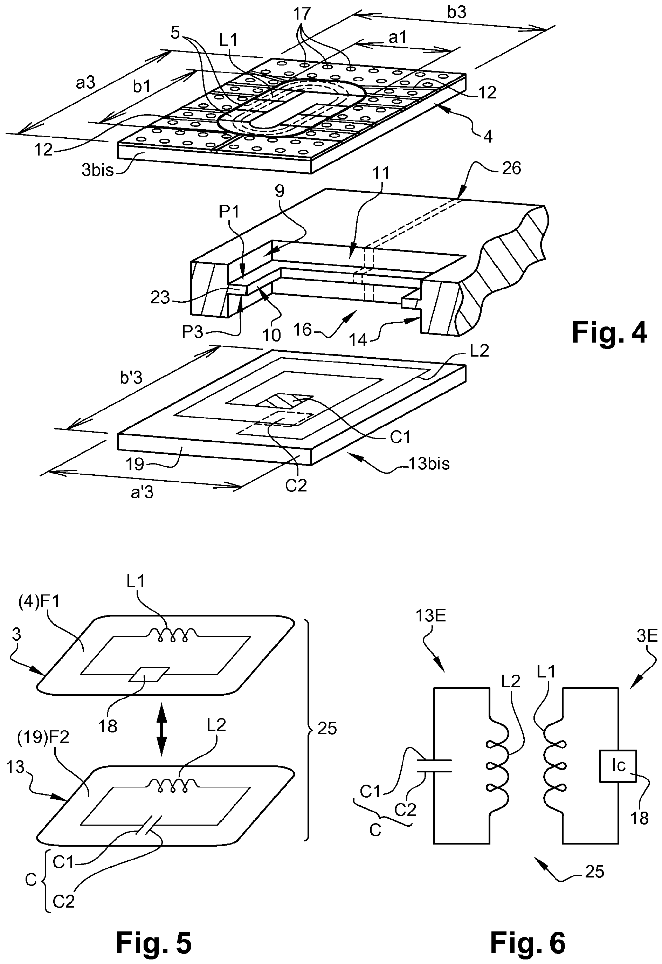

Selon une caractéristique du mode préféré, le procédé comprend une étape de réalisation d'une seconde cavité 14 débouchant sur une face 8 opposée à ladite première face 7, ladite seconde cavité étant configurée pour recevoir au moins la bobine L2 de l'antenne relais (13E figure 6).

La seconde cavité 14 a de préférence une ouverture débouchant sur la face arrière de la carte et dont la surface est plus grande que celle de l'ouverture de cavité recevant le module 3 à antenne L1. Par exemple, la surface de l'ouverture de la cavité 14 peut être de 10 % à 100% plus importante que celle de la première cavité 6.

Selon une caractéristique, le procédé prévoit une étape d'insertion d'au moins l'antenne relais (L2, 13E) dans la seconde cavité 14.
L'antenne relais (L2, 13E formant un circuit RLC) peut être disposée sur un substrat 4 de préférence isolant mais si l'antenne est elle-même isolée, le substrat peut comprendre du métal.

Les spires d'antenne relais L2 sont de préférence gainées d'isolant électrique ou recouvert d'une pellicule ou un film isolant pour éviter un court-circuit avec le métal 2 du corps de carte quand ce dernier est présent.

Ainsi, l'invention permet une fabrication aisée d'une carte à puce avec des performances améliorées par une antenne « booster » (ou antenne relais, ou amplificatrice 13E). Le procédé de fabrication prévoit avantageusement deux opérations d'encartage de module bien maîtrisées dans l'industrie de la carte à puce, puisque l'antenne relais peut se présenter ou être obtenu conformément aux procédés habituels de fabrication de module de carte à puce (Lead frame). L'antenne relais peut être obtenue par gravure ou laminage de cuivre ou autre métal conducteur sur un substrat. L'antenne et/ou des plaques de condensateur C1, C2 peuvent être aussi découpées dans une feuille de métal et être contre collées sur un substrat.
Ce procédé évite d'avoir à placer une grande antenne relais dans le corps de carte et de rechercher la fibre neutre du corps de carte.

Ce procédé dans lequel les fonctions de la carte sont concentrées au niveau du module 19 permet de libérer de la place en surface de la carte pour d'autres fonctions de personnalisation ou d'embossage.

Le fait d'encarter une antenne relais sur la face arrière d'une carte comme un module parait être une nouvelle approche non explorée par l'homme de l'art.

L'invention peut viser la fabrication de cartes ayant un corps de carte de toute matière, (plastique ou autre) dans la mesure où la fabrication est plus simple.

Toutefois, l'invention prend plus d'avantages ou d'intérêts quand elle prévoit la fourniture d'un insert ou élément de corps de carte comportant du métal. Le métal peut être sous différentes formes notamment en une plaque ou au moins une ou plusieurs feuille(s) ou lame(s) de métal assemblées superposées. Il peut se présenter sous forme de fils métalliques, granulés, billes, poudre de métal dans une matrice polymère.

La partie métallique 2 peut comporter ou présenter, de préférence, une découpe latérale (ou échancrure 26 sur un des bords latéraux du métal généralisable à toute les modes de réalisation : voir fig.4). L'échancrure peut présenter une largeur correspondant à celle d'un emplacement de module radiofréquence complet ou à une cavité complète (ex. avec plans P1 et P3 de cavité) de réception d'un module radiofréquence. L'échancrure (ou la fente 26) peut s'étendre de la cavité jusqu'à un des bords périphérique du corps de carte, notamment un des bords le plus proche de l'emplacement de module (contrairement à la fig. 4). Cette fente 26 peut améliorer les performances radiofréquences mais n'est pas une des caractéristiques nécessaires ou préférées.

L'invention prévoit l'insertion d'un module 3 à antenne radiofréquence dans la première cavité 6 ; Eventuellement, le module M peut s'étendre également au moins en partie plus profondément dans l'évidement central 11 via sa puce électronique ou son enrobage.

Le module 3 peut être à contacts électriques 5 affleurant en surface 7 d'une carte ayant un corps totalement en métal, ou affleurant à une carte ayant un insert (ou inlay) 2 en métal (auquel on a ajouté des couches plastiques de part et d'autre du corps de carte).

L'échancrure 26 peut être plus ou moins fine et proche d'un bord. Le module M peut être de type hybride (contacts et radiofréquence ou simplement radiofréquence.

Le module 3 ou 13 (ou 3bis, 13bis) peut comporter un capteur biométrique débouchant sur la face arrière et associé à des moyens de traitement (ou microcontrôleur) de données saisies ; ce microcontrôleur peut être en communication avec une puce de sécurité (voire la puce radiofréquence) du module 3 contenant des modèles d'empreinte enregistrés ou enrôlés.
Le capteur biométrique du module peut affleurer la surface du corps de carte.

De préférence, le capteur biométrique peut être appariée avec une puce radiofréquence du premier module (3, 3bis).

L'échancrure 26 permet soit de faciliter l'usinage de la cavité de réception du module, soit d'éviter des perturbations dans la propagation de champ électromagnétique.

L'élément de métal 2 s'étend de préférence sensiblement autour ou en périphérie du module 3 (ou au moins sur 3 côtés à 90 degrés du module). Cela permet notamment de couvrir le maximum de surface du corps de carte et apporter un maximum de poids.

La carte 1 peut comprendre une ouverture 11 traversant la plaque de métal et correspondant à l'emplacement du module.

Le module radiofréquence 3 de carte à puce peut comprendre de manière connue par exemple, une puce radiofréquence et une antenne de communication reliée à la puce disposée sur un premier substrat diélectrique 4.

La plaque de métal 2 peut comprendre des perforations (non illustrées) ou des ouvertures (traversantes ou non) pour accrocher des feuilles de recouvrement éventuelles entres-elles ou pour s'accrocher mécaniquement au métal et éviter une délamination. Le métal peut être sous forme de grille ou de feuille perforée de préférence partout ou au moins en périphérie pour mieux lier des feuilles de recouvrement isolantes quand elles sont présentes.

De préférence, l'élément de métal 2 s'étend jusqu'au bord périphérique du corps de carte au moins sur un côté.

La plaque 2 (ou les feuilles) de métal peut être légèrement en retrait par rapport au bord du bord périphérique de la carte, notamment pour éviter des courts-circuits. Par exemple, le bord peut comprendre un isolant tel l'alumine pour un corps en aluminium ou autre oxyde pour d'autres métaux. Le métal peut comprendre une couche fine isolante, par exemple de moins de 0,5 mm ou de moins d'un millimètre en périphérie.

De préférence, la plaque ou feuille(s) de métal ou la couche majoritairement en métal s'étend sensiblement jusqu'au moins un bord périphérique 17 (ou chant) de la carte.

L'élément (ou couche) de corps de carte peut comprendre tout matériau plastique notamment à base de polychlorure de vinyle (PVC), d'un polyéthylène téréphtalate (PET), d'un polycarbonate (PC), d'un polyéthylène téréphtalate glycol (PETG), d'un acrylonitrile butadiène styrène (ABS).

L'invention prévoit aussi une insertion d'une antenne relais ou (module 13 la comprenant) dans ladite seconde cavité 14.

Les antennes (ou inductance) L1, L2 peuvent être de tout type, notamment en forme de spirale et conforme à l'ISO/IEC 14443 ou de type UHF.

Dans l'exemple (fig. 1A) le module 3 peut comprendre une antenne spiralée L1 notamment en cuivre gravée sur un premier substrat diélectrique 4 tel que du polyimide.

L'antenne L1 est ici connectée à une puce radiofréquence 18 portée par le module 3.

Dans l'exemple (fig. 1A), une bobine ou spirale L2 est disposée sur un second substrat 19. Le second substrat 19 peut être de la même nature que le premier substrat 4.

L'antenne relais 13 peut comprendre une ou plusieurs plaques de condensateur C1, C2 pour former un circuit RLC. Les plaques de condensateur peuvent être sous forme d'une plaque gravée ou collée sur le substrat 13 de part et d'autre du substrat 19. Le condensateur C peut être aussi sous forme de puce de circuit intégré.

Selon une autre caractéristique du mode préféré, le procédé comporte également, une étape de réalisation d'une seconde cavité 9, 14 débouchant sur la face opposée 8 à la première face 7 en étant en regard au moins partiel de la première cavité 6.

L'ouverture de la cavité 14 pour antenne relais (L2, 13E) débouchant en surface du corps 2 est ici plus grande que celle de la cavité 6 de module 3. L'antenne relais (L2, 13E) présente une surface de couplage plus importante que celle de l'antenne L1 du premier module 3.

De préférence, les première et seconde cavités 9, 14 sont réalisées d'un côté et de l'autre opposé d'une plaque métallique 2.

Dans l'exemple, la cavité 14 est réalisée par usinage, fraisage ou perçage mais peut être réalisée par tout moyen connu tel que moulage, etc.
La cavité 14 définit un bord interne 15 un fond de cavité définissant un second plan P3 (équivalent et opposé au plan P1) de la première cavité 6. Elle définit un évidement 16 central dans la cavité 14 à travers le plan P3.

Les cavités 9, 14 sont configurées de préférence de manière à former respectivement un plan P1 et P3 en regard l'un de l'autre. Toutefois, ils peuvent être décalés ou excentrés l'un par rapport à l'autre.

De préférence, pour permettre de bonnes performances radiofréquences, les cavités 6 et 14 sont positionnées le plus possible en regard l'une de l'autre.

Ainsi, la double-cavité traversante 9, 14 présente une configuration avec une membrane 23 évidée au centre ou un épaulement interne qui sert de plan de support P1, P3 respectivement au module 3 et au module 13 à antenne relais (L2, 13E)

Alternativement, fig. 2A chaque plan P1 et P3 peut être formé par au moins deux ou trois excroissances ou dents 22 s'étendant vers le centre de la cavité et formant chacune un point d'appui pour au moins le module 3 et/ou le module 13 à antenne relais (L2, 13E).

Les plans P1 et P3 peuvent comporter des perforations, des trous, évidements 24 ou des encoches, des fentes traversant les plans P1, P3 et débouchant dans les deux cavités 9, 14 de manière à permettre aux antennes de mieux rayonner mais aussi pour accrocher ou ancrer les modules 3, 3bis, 13, 13bis à travers les trous (ou équivalents) 24 à l'aide d'un adhésif qui adhère aux deux modules.

La membrane 23 quand elle est en métal, peut comporter des découpes ou perforations traversant la membrane 23 (ou collerette) de manière à présenter le moins de métal possible s'étendant radialement dans la cavité et qui pourrait faire barrière au champ électromagnétique. La cavité peut comporter des dentelures 22 ancrées dans la paroi de la cavité et orientées vers le centre ou une médiane de la cavité.

Selon une alternative (non illustrée), la membrane peut être formée par un circlip intérieur élastique placé dans une rainure d'accueil correspondant au circlip à la place de l'épaulement ou membrane délimitée entre les deux plans P1 et P3.

Avantageusement, le circlip peut être en matière distincte du métal, telle que du plastique. Cela permet d'éviter un éventuel court-circuit avec des métallisations des modules (antenne, plaque de capacité...)

La partie (ou module) 13 peut être configurée de toute manière pour s'emboiter dans la cavité 14 et s'assembler avec la première partie 3.
Le module 3 peut avoir des encoches ou des protubérantes (non illustrées) pour pouvoir s'encliqueter dans des éléments correspondant dans la cavité 9 et/ou 14 de manière à se maintenir en place. Par exemple, des flèches, harpons, ou tiges d'ancrage avec des portions de glissement inclinées peuvent s'étendre perpendiculairement à la surface du module pour venir s'ancrer sur le plan P3.

Tout moyen mécanique non démontable connu de l'homme de l'art peut être envisagé pour maintenir l'un des modules 3, 13 en place et former un ensemble (ou système) 25 (3, 13 ou 3E, 13E) de communication radiofréquence avec « booster » ou à antenne relais (L2, 13E).

Il est également possible d'encarter (ou insérer) chaque sous-partie 3, 13 du système 25 de manière connue avec des points de colle ou une collerette (ou anneau) adhésive déposée sur les plans de cavité P1 et/ou P3.

Les parties 3, 13 peuvent aussi s'assembler entre elles par tout moyen d'accrochage mécanique ou adhésif sans pour autant adhérer ou accrocher un des plans de cavité P1 et/ou P3.

Selon une autre caractéristique de ce mode préféré, le procédé prévoit l'insertion de l'antenne relais 13 ainsi configurée dans la seconde cavité 14.

De préférence, on réalise chaque antenne 3, 3 bis, 13, 13 bis par tout procédé connu tel que gravure de cuivre, incrustation de fil, jet de matière, etc. sur le substrat 4 ou 19.

A la figure 3A, est illustrée la carte 1 obtenue selon le mode de réalisation préféré du procédé. Les parties 3 et 13 (ou 3E, 13E) de l'ensemble de communication amplifié 25, sont disposées dans leur cavité respective 9, 14 en étant insérées respectivement via les faces opposées 7 et 8 de la carte. Elles peuvent être fixées par deux adhésifs 20, 21 disposés respectivement entre une face inférieure du module antenne 3 et le plan P1 et entre une face supérieure du module de l'antenne relais et le plan P3.

Alternativement, sur un autre mode de réalisation (illustré sur la figure 4), les modules 3bis et 13bis peuvent avoir sensiblement les mêmes encombrements ou dimensions (largeur a3 et longueur b3 à environ 1 ou 4 millimètres près) en surface.
La figure 4 diffère aussi de la figure 1A en ce que les plages 5 ou métallisations peuvent être plus étendues et s'étendre jusqu'aux bords du module 3bis ou du film support diélectrique (F1, 4).

L'étendue de l'antenne L2 de module peut être la même que celle de la figure 1A.

L'antenne relais L2 peut être la même que celle de la figure 1A. Ainsi, l'antenne relais L2 présente une surface de couplage à l'intérieur de la spire externe qui est plus grande que celle de l'antenne L1 du module 3.

L'antenne relais (L2, 13E) comporte généralement un condensateur C qui peut être sous différentes formes, par exemple formée de plaques de condensateur C1 et C2 reliées à l'antenne L2 et disposées de part et d'autre d'un substrat isolant 19 support. La capacité C peut être aussi sous forme de composant monté en surface CMS ou de puce de circuit intégré.

Les dimensions (de largeur a3 et longueur b3) du module antenne 3 sont sensiblement égales à celles (a'3 et b'3) du substrat (F2, 19) porteur de l'antenne relais 13E. Par contre, les dimensions de largeur a3 et longueur b3 de l'antenne L1 de module sont plus petites que celles à'3 et b'3 de l'antenne relais L2.

Selon une caractéristique avantageuse, le module 3 ou 3bis peut être avec des plages de contact ajourées ou perforées pour laisser passer du champ électromagnétique. Le module peut présenter une absence de métal ou du métal ajouré sur le bord périphérique du module.

Dans l'exemple fig. 4, Le module 3bis peut présenter des trous ou perforations 17 et/ou des langues, moustaches 12 métalliques dans des métallisations externes du module notamment dans une bordure du module 3bis de quelques millimètres (2 à 5 mm) par exemple, située en périphérie des plages de contact 5 standardisées de module de carte à puce selon le standard ISO 7816 (au centre du module 3bis).
Ces dispositions peuvent permettre d'améliorer notamment la perméabilité des ondes électromagnétiques.

Le module 3bis peut comporter des métallisations sur une frange périphérique par exemple de 2 à 5 mm de large ; Les métallisations peuvent comporter des fentes (entre des langues ou moustaches ou fentes 12) et/ou des perforations traversantes, distinctes des séparations des plages de contact et hors des zones standardisées de plage de contact et séparées des plages de contact standardisées. Les valeurs de « a1 et b1 » peuvent être par exemple comprises entre 1 et 1,8 cm et a3 et b3 comprises entre 1 et 2,5 cm.

Ainsi, l'antenne relais L2 peut être plus efficace pour rayonner ou capter du champ électromagnétique à travers les perforations 17 ou frange périphérique du module et de pouvoir rayonner sur l'autre face que le module antenne.

Au moins, une des sous-parties 3bis et 13bis peut être amovible (ou démontable) par rapport au corps 2 de carte. Les parties 3bis, 13bis peuvent avoir un montage de type à vis ou à baïonnette avec ou sans colle de maintien en place dans la vis ou la baïonnette.
Ce montage permet de mieux maintenir en place le module et empêcher ou rendre difficile une tentative ou démontage éventuelle pour des cartes anti-fraude.

Alternativement, les deux modules 3bis, 13bis peuvent être appariés de manière à ne pas fonctionner l'un sans l'autre et/ou qu'en présence de l'un avec l'autre (par exemple en mettant en oeuvre une fonction d'authentification mutuelle).

Le corps de carte ainsi obtenu avec une feuille ou plaque de métal (2) qui peut être assemblé le cas échéant, à une ou plusieurs feuilles polymère de couverture ou de décoration. Ainsi le module 13 peut être recouvert et masqué grâce à une feuille (overlay) polymère de couverture recouvrant le corps 2 en métal ou non. Cette feuille permet aussi de renforcer une indémontable du module notamment quand la partie 13bis est montée fermement solidaire de la partie 13bis.

La figure 5 illustre schématiquement le module 3 (ou 3bis) et le module 13 de l'antenne relais (L2 ou 13E) en cours de rapprochement pour un assemblage et mise en position tous deux de couplage électromagnétique. Les circuits électriques 3E du module 3 et de l'antenne relais 13E peuvent être portés par des films supports isolants (4, F1) ou (19, F2).

Alternativement, les circuits 3E, 13E peuvent être mis dans leur cavité et recouverts par une matière ou résine isolante de remplissage.

La figure 6 illustre schématiquement le circuit électrique résultant formant un transpondeur radiofréquence 25 équipé d'une antenne relais (ou d'un booster 13E) obtenu grâce à l'assemblage des éléments de carte 3, 2, 13 de l'invention. Le transpondeur 25 comporte un circuit électrique 3E du module 3 (ou 3bis) à antenne de carte à puce et un circuit électrique à antenne relais 13E du module d'antenne relais 13 (ou 13bis).
Les plaques C1 et C2 de condensateur forment la capacité « C » reliée à l'antenne L2 pour former un circuit RLC.

Ici, l'antenne L1 du module 3 (ou 3 bis) est connectée en série à une antenne complémentaire L2 située dans le sous-module 13 (ou 13bis). Cependant, d'autres montages (ou connexions) électriques peuvent être envisagés comme un montage en parallèle des antennes (ou bobines) L1, L2.

## Revendications

1. Procédé de fabrication d'une carte à puce radiofréquence, ledit procédé comprenant les étapes de :
- fourniture d'un corps (2) de carte (1) comportant une première cavité (9) débouchant sur une première face (7) du corps de carte;
- insertion d'un premier module (3, 3bis) équipé d'une antenne de module radiofréquence (L1), dans ladite première cavité,
- disposition dans ledit corps de carte, d'une antenne relais (L2) configurée de manière à être couplée électromagnétiquement avec ladite antenne radiofréquence,
**caractérisé en ce qu'**il comprend les étapes suivantes :
- réalisation d'une seconde cavité (14) débouchant sur une face opposée (8) à ladite première face, ladite seconde cavité étant configurée pour recevoir antenne relais (L2, 13E),
- insertion d'une antenne relais dans ladite seconde cavité.

2. Procédé selon la revendication précédente, **caractérisé en ce que** lesdites première et seconde cavités (9, 14) sont réalisées d'un côté et de l'autre opposé d'une ou plusieurs plaque(s) ou feuilles métallique (2).

3. Procédé selon la revendication précédente, **caractérisé en ce que** chaque cavité (9, 14) est configurée de manière à former respectivement un plan (P1) et plan (P3) en regard l'un de l'autre.

4. Procédé selon l'une des revendications 2 ou 3, **caractérisé en ce que** les premier P1 et second plans (P3) sont formés par au moins trois excroissances ou dents (22) s'étendant vers le centre de la cavité et formant chacune un point d'appui d'au moins un module (3, 3bis).

5. Procédé selon l'une des revendications précédentes, **caractérisé en ce que** les premier (P1) et second plans (P3) comportent des perforations, des évidements (23) ou des encoches (24) traversant les plans et débouchant dans les deux cavités (9, 14).

6. Procédé selon l'une des revendications précédentes, **caractérisé en ce que** le module 3 comporte une frange périphérique de 2 à 5 mm de large exempte de spire.

7. Procédé selon l'une des revendications précédentes, **caractérisé en ce que** le module 3 comporte des métallisations sur une frange périphérique de 2 à 5 mm de large, ladite métallisation comportant des fentes ou perforations traversantes (17), distinctes des séparations des plages de contact et hors des zones standardisées de plage de contact.

8. Carte à puce radiofréquence, comprenant:
- un corps (2) de carte (1) comportant une première cavité (9) débouchant sur une première face (7) du corps de carte;
- d'un module (3) équipé d'une antenne de module radiofréquence (L1), inséré dans ladite première cavité,
- une antenne relais (L2, 13E) dans ledit corps de carte, configurée de manière à être couplée électromagnétiquement avec ladite antenne radiofréquence,
**caractérisée en ce qu'**elle comprend:
- une seconde cavité (14) débouchant sur une face opposée (8) à ladite première face, ladite seconde cavité étant configurée de manière à recevoir ladite antenne relais (L2, 13E),
- ladite antenne relais étant insérée dans ladite seconde cavité.

9. Carte selon la revendication précédente, **caractérisée en ce que** lesdites première et seconde cavités (9, 14) sont réalisées d'un côté et de l'autre opposé d'une feuille ou plaque métallique (2).

10. Carte selon l'une des revendications 9 à 10, **caractérisée en ce que** ladite feuille ou plaque métallique (2) est assemblée à une ou plusieurs feuilles polymère de couverture ou de décoration.

11. Carte selon l'une des revendications 9 à 11, **caractérisée en ce que** ledit second module (3, 3bis) comprend un capteur biométrique affleurant à la surface du corps de carte.

12. Carte selon la revendication précédente, **caractérisée en ce que** ledit capteur biométrique est appariée avec une puce radiofréquence du premier module (3, 3bis).
